# EUROPÄISCHE PATENTANMELDUNG

(11) **EP 4 604 386 A1**
(43) Veröffentlichungstag der Anmeldung: **20.08.2025**
(21) Anmeldenummer: 25158079.1
(22) Anmeldetag: 14.02.2025
(51) Int. Cl.: H02P 27/06, F25B 49/00, F25B 49/02, H05K 7/20

(54) **MULTIINVERTER FÜR EINE WÄRMEPUMPE**

(30) Priorität: 16.02.2024 DE 102024104462
(71) Anmelder: Stiebel Eltron GmbH & Co. KG, 37603 Holzminden (DE)
(72) Erfinder: SCHAUMLÖFFEL, Michael, 37671 Höxter (DE); HOLTDIRK, Marius, 59556 Lippstadt (DE); THIES, Dominik, 37697 Lauenförde (DE)

(57) **Zusammenfassung**

Die Erfindung betrifft eine elektrische Baugruppe (100) zur Ansteuerung mindestens zweier Elektromotoren (M1,M2,... Mn) einer Wärmepumpe (300) und eine zugehörige Wärmepumpe (300). Die Baugruppe umfasst mindestens zwei Leistungsmodule (130), einen Zwischenkreis (120) und einen Gleichrichter (110), wobei der Gleichrichter (110) an ein Stromnetz anschließbar ist, das Wechselspannung bereitstellt, zur Gleichrichtung der elektrischen Wechselnetzspannung und zur Bereitstellung der gleichgerichteten Spannung an dem Zwischenkreis (120), wobei der Zwischenkreis (120) dazu ausgebildet ist, jedes Leistungsmodul (130) der mindestens zwei Leistungsmodule (130) mit elektrischem Strom zu versorgen, wobei jedes Leistungsmodul (130) dafür eingerichtet ist, einen elektrischen Wechselstrom mit steuerbarer Frequenz und/oder Amplitude zur leistungsvariablen Ansteuerung jeweils eines Elektromotors (M1,M2,...Mn) der Wärmepumpe (300) bereitzustellen.

## Beschreibung

Die vorliegende Erfindung betrifft eine elektrische Baugruppe zur Steuerung mindestens zweier Elektromotoren einer Wärmepumpe und eine zugehörige Wärmepumpe.

Wärmepumpen stellen einen wichtigen Baustein beispielsweise in der Bereitstellung effizienter und umweltfreundlicher Heizstrukturen für Gebäude dar. Wärmepumpen nehmen mittels eines Kältemittelkreislaufs unter Aufwendung technischer Arbeit thermische Energie aus einem Reservoir mit niedrigerer Temperatur auf und übertragen diese dann als Nutzwärme mit höherer Temperatur auf ein zu beheizendes System.

Allgemein umfassen Wärmepumpen einen Kältemittelkreislauf und mehrere Elektromotoren, um Komponenten wie beispielsweise Verdichterpumpen, Umwälzpumpen, Lüfter oder dergleichen zu betreiben. Des Weiteren sind diese Elektromotoren häufig als bürstenlose Permanentmagnetmotoren ausgeführt, weil diese in ihrer Drehzahl regelbar und damit mit höchster Effizienz betrieben werden können. Diese bürstenlose Permanentmagnetmotoren umfassen einen Rotor mit Permanentmagneten und Motorwicklungen, die ringförmig um diesen Rotor angeordnet sind. In der Regel werden die Permanentmagnetmotoren durch eine Elektronik angetrieben, die die entsprechenden Motorwicklungen in der korrekten Taktung bestromt.

Drehzahlregelbare Motoren weisen gegenüber klassischen getakteten Elektromotoren den Vorteil auf, dass die Motoren und damit die Wärmepumpe immer nahe der optimalen Betriebspunkte betreibbar sind und damit die Effizienz der Wärmepumpe erhöhen.

Frequenz- bzw. Drehzahlregelbare oder per Umrichter betriebene Elektromotoren erzeugen durch die Frequenzumrichtung jedoch Oberschwingungen, die in das Stromnetz eingetragen werden und die Netzqualität verringern. Oberschwingungen überlagern die sinusförmige Spannungs- und Stromgrundschwingung, was zu Problemen an weiteren Geräten wie beispielsweise einem unerwarteten Auslösen von Sicherungen und Leistungsschaltern, Schäden an Leistungskondensatoren oder Kompensationsanlagen führen kann.

Für den Betrieb der Elektromotoren werden erhebliche Mengen Strom benötigt. Der Anteil der Wärmepumpen an dem Gesamtverbrauch im Stromnetz ist daher bereits jetzt hoch und wird durch den steigenden Ausbau der Wärmepumpentechnologie weiter ansteigen. Damit steigt auch die Bedeutung und Relevanz der Wärmepumpe für Qualität und Stabilität des Stromnetzes.

Vor diesem Hintergrund war es eine Aufgabe der vorliegenden Erfindung, einen positiven Einfluss mit dem Betrieb der Wärmepumpe auf die Netzstabilität zu erreichen, ohne dabei die Effizienz der Wärmepumpe zu verringern. Zudem war es eine Aufgabe, den Aufbau der Wärmepumpe zu vereinfachen. Schließlich war es eine Aufgabe, eine alternative Wärmepumpe bereitzustellen.

Nach einem Aspekt der Erfindung umfasst eine elektrische Baugruppe zur Ansteuerung mindestens zweier Elektromotoren einer Wärmepumpe mindestens zwei Leistungsmodule, einen Zwischenkreis, und einen Gleichrichter, wobei der Gleichrichter an ein Stromnetz anschließbar ist, das Wechselspannung bereitstellt, zur Gleichrichtung der elektrischen Wechselnetzspannung und zur Bereitstellung der gleichgerichteten Spannung an dem Zwischenkreis, wobei der Zwischenkreis dazu ausgebildet ist, jedes Leistungsmodul der mindestens zwei Leistungsmodule mit elektrischem Strom zu versorgen, wobei jedes Leistungsmodul dafür eingerichtet ist, einen elektrischen Wechselstrom mit steuerbarer Frequenz und/oder Amplitude zur leistungsvariablen Ansteuerung jeweils eines Elektromotors der Wärmepumpe bereitzustellen..

Durch die Bereitstellung einer gleichgerichteten Spannung durch einen einzigen Zwischenkreis an jedem der Leistungsmodule müssen Netzrückwirkungen nur einmal zwischen ausgehend vom Inverter auf das Stromnetz bekämpft werden.

Dieser Vorteil ist erreicht, da lediglich ein Modul zur Gleichrichtung verbaut werden muss und die gleichgerichtete Spannung für die Ansteuerung mehrerer Leistungsmodule mit Elektromotoren verwendet werden kann. Somit benötigt nicht jeder Elektromotor einen eigenen Gleichrichter bzw. eigenständigen Umrichter.

Die Anzahl der Leistungsmodule kann abhängig von der Anzahl der Elektromotoren der Wärmepumpe sein und in anderen Ausführungen mehr als zwei betragen. Sind beispielsweise fünf Elektromotoren an der elektrischen Baugruppe angeschlossen, so kann diese fünf Leistungsmodule umfassen, jeweils ein Modul für jeden Elektromotor. Die Leistungsmodule sind vorzugsweise dafür eingerichtete, getrennt voneinander angesteuert zu werden. So kann die Leistungsaufnahme der verschiedenen Leistungsmodule unterschiedlich sein und die Effizienz der Wärmepumpe durch eine optimale Ansteuerung der jeweiligen Elektromotoren ist hoch.

In einer weiteren Ausführungsform ist jeder Elektromotor der mindestens zwei Elektromotoren dafür eingerichtet, einen Verdichter oder einen Wärmepumpenlüfter oder einen Zuluftlüfter oder einen Abluftlüfter oder eine Umwälzpumpe in Bewegung zu setzen.

In einer weiteren Ausführungsform ist die bereitgestellte Wechselspannung sämtlicher der Leistungsmodule unabhängig voneinander steuerbar.

In einer weiteren Ausführungsform umfasst die Baugruppe mindestens eine Motorschutzeinrichtung. Vorteilhafterweise muss dann nur eine Motorschutzeinrichtung in der Baugruppe verbaut sein und nicht jeweils eine Motorschutzeinrichtung pro Elektromotor. Die Motorschutzeinrichtung soll die Elektromotoren beispielsweise vor Überlastung schützen. Hierfür wird überwiegend die Stromaufnahme überwacht. Vorzugsweise unterbricht die Motorschutzeinrichtung den Strom, wenn die Stromstärke über einer gewissen Schwelle für eine bestimmte Zeit ist.

In einer weiteren Ausführungsform sind die mindestens zwei Elektromotoren Permanentmagnetmotoren. Die Elektromotoren sind vorzugsweise bürstenlose Permanentmagnetmotoren, die hocheffizient betrieben werden können.

In einer weiteren Ausführungsform weisen die Leistungsmodule Steuerelektronik auf, die dazu ausgebildet sind, Frequenz- und/oder Amplitude der an den Elektromotoren bereitgestellten elektrischen Wechselspannung zu steuern.

Vorzugsweise ist die Baugruppe mit Gleichstrom oder mit Gleichspannung im Zwischenkreis ausgeführt.

Ein weiterer Aspekt der Erfindung betrifft eine Wärmepumpe, umfassend eine erfindungsgemäße elektrische Baugruppe und einen Kältemittelkreislauf, wobei der Kältemittelkreislauf ein Kältemittel, einen Verflüssiger, ein Expansionsventil, einen Verdampfer und einen Verdichter umfasst, wobei der Verdichter einen ersten Elektromotor aufweist und wobei der Verdampfer einen Lüfter mit einem zweiten Elektromotor aufweist, wobei die elektrische Baugruppe dafür eingerichtet ist, den ersten und den zweiten Elektromotor insbesondere unabhängig voneinander anzusteuern. Das Kältemittel kann ein handelsübliches Kältemittel sein, welches in Wärmepumpen Verwendung findet. Das Kältemittel kann vorzugsweise R290, R410A, R407C, R32 oder eine Mischung daraus sein.

Weiter wird ein Wärmepumpensystem umfassend die erfindungsgemäße Wärmepumpe und einen Speicherkreislauf vorgeschlagen, wobei der Verflüssiger dafür eingerichtet ist, Wärme an den Speicherkreislauf zu übertragen, wobei der Speicherkreislauf einen Wärmespeicher und eine Umwälzpumpe umfasst, wobei die Umwälzpumpe einen Elektromotor umfasst und von diesem betreibbar ist, wobei der Elektromotor der Umwälzpumpe von einem eigenen Leistungsmodul der elektrischen Baugruppe angesteuert wird. Mithilfe des Speicherkreislaufes kann derzeit nicht benötigte Wärme in dem Wärmespeicher gegen gespeichert werden, um diese zu einem späteren Zeitpunkt nutzen zu können.

In einer weiteren Ausführungsform ist der Wärmespeicher des Speicherkreislaufes ein Warmwasserbehälter. Ein Warmwasserbehälter als Wärmespeicher ist leicht realisierbar und verfügt über ein geringes Gefahrenpotential.

In einer weiteren Ausführungsform umfasst der Speicherkreislauf eine elektrische Nacherwärmung. Sollte der Speicherkreislauf mehr Energie benötigen, um das von der Wärmepumpe gewärmte Objekt auf eine bevorzugte Temperatur zu erwärmen, so kann eine elektrische Nacherwärmung hinzugeschalten werden, um die Temperatur im Speicherkreislauf zu erhöhen.

In einer weiteren Ausführungsform umfasst der Speicherkreislauf einen Solarwärmeübertrager, der dafür eingerichtet ist, Wärme von einem Solarkollektorkreislauf an den Speicherkreislauf zu übertragen, wobei der Solarkollektorkreislauf mindestens einen Solarkollektor umfasst. Um die Effizienz des Wärmesystems weiter zu steigern, ist es vorteilhaft, weitere regenerative Energiequellen in das System einzubeziehen. Über den Solarwärmeübertrager, der an einem Solarkollektorkreislauf angeschlossen ist, kann Sonnenenergie dem Speicherkreislauf über den Wärmetauscher zugeführt werden. Vorzugsweise ist auch in dem Solarkollektorkreislauf eine Umwälzpumpe mit einem weiteren Elektromotor ausgebildet, wobei der weitere Elektromotor der Umwälzpumpe von einem eigenen Leistungsmodul der elektrischen Baugruppe angesteuert wird.

In einer weiteren Ausführungsform stellt ein Kreuz-Gegenstrom Wärmeübertrager Fortluft an dem Verdampfer bereit, wobei der Kreuz-Gegenstrom Wärmeübertrager einströmende Abluft und einströmende Außenluft zur Wärmeübertragung miteinander kreuzt und Zuluft, sowie Fortluft ausströmt. Mithilfe des Kreuz-Gegenstrom Wärmeübertragers kann Wärme der Abluft nutzbar gemacht werden, indem die Abluftwärme über einen Wärmetauscher im Kreuz-Gegenstrom Wärmeübertrager an Außenluft abgegeben wird, welche sich dadurch erwärmt. Die erwärmte Außenluft wird sodann als Fortluft am Verdampfer bereitgestellt, wodurch dem Kältemittel am Verdampfer wieder Wärme zugeführt wird.

In einer weiteren Ausführungsform wird Abluft über einen Lüfter für Abluft am Kreuz-Gegenstrom Wärmeübertrager bereitgestellt, wobei der Lüfter für Abluft einen Elektromotor umfasst, der von einem Leistungsmodul der elektrischen Baugruppe angesteuert wird, und wobei Zuluft über einen Lüfter für Zuluft vom Kreuz-Gegenstrom Wärmeübertrager abgeführt wird, wobei der Lüfter für Zuluft einen Elektromotor umfasst, der von einem eigenen Leistungsmodul der elektrischen Baugruppe angesteuert wird. Die Abluft, welche am Kreuz-Gegenstrom Wärmeübertrager vorbeiströmt enthält Wärme, die nutzbar gemacht werden kann. Hierfür wird die Abluft am Kreuz-Gegenstrom Wärmeübertrager bereitgestellt, um über einen Wärmetauscher Wärme an Zuluft abzugeben, welche dann am Verdampfer bereitgestellt wird.

In einer weiteren Ausführungsform erwärmt ein Vorerwärmer Außenluft vor dem Eintritt in den Kreuz-Gegenstrom Wärmeübertrager, vorzugsweise, wobei der Vorerwärmer einen Vorerwärmer-Wärmekreislauf umfasst, wobei ein Unterkühler dafür eingerichtet ist, Wärme vom Kältemittelkreis der Wärmepumpe an dem Vorerwärmer-Wärmekreislauf bereitzustellen. Durch das Erwärmen der Außenluft, welche anschließend in den Kreuz-Gegenstrom Wärmeübertrager geleitet wird, kann das Risiko des Einfrierens des Kreuz-Gegenstrom Wärmeübertragers reduziert werden. Die Zuschaltung des Vorerwärmer-Wärmekreislaufs kann gesteuert erfolgen, sollte es beispielweise bei kalten Außentemperaturen erforderlich sein.

Der Vorerwärmer-Wärmekreislauf ist insbesondere als Heatpipe ausgeführt.

In einer weiteren Ausführungsform umfasst der Speicherkreislauf einen Heizkreis. Der Heizkreis kann einen oder mehrere Heizelemente, wie beispielsweise Heizkörper oder Flächenheizungen umfassen, um Räume eines Gebäudes mit Wärme zu versorgen.

In einer weiteren Ausführungsform wird der Inverterzwischenkreis über einen Bypass mit Rücklaufwasser aus dem Speicherkreislauf gekühlt. Dies hat den Vorteil, dass der Inverterzwischenkreis nicht mit zusätzlichem energetischen Aufwand gekühlt werden muss, sondern die Abwärme der Leistungsmodule dem System zugeführt wird.

Weitere Vorteile und bevorzugte Ausgestaltungen werden nachfolgend mit Verweis auf die beigefügten Figuren beschrieben. Hierbei zeigen:
- Fig. 1: schematisch und exemplarisch ein Schaltbild einer erfindungsgemäßen Wärmepumpe eine erfindungsgemäße elektrische Baugruppe und
- Fig. 2: schematisch und exemplarisch eine erfindungsgemäße elektrische Baugruppe.

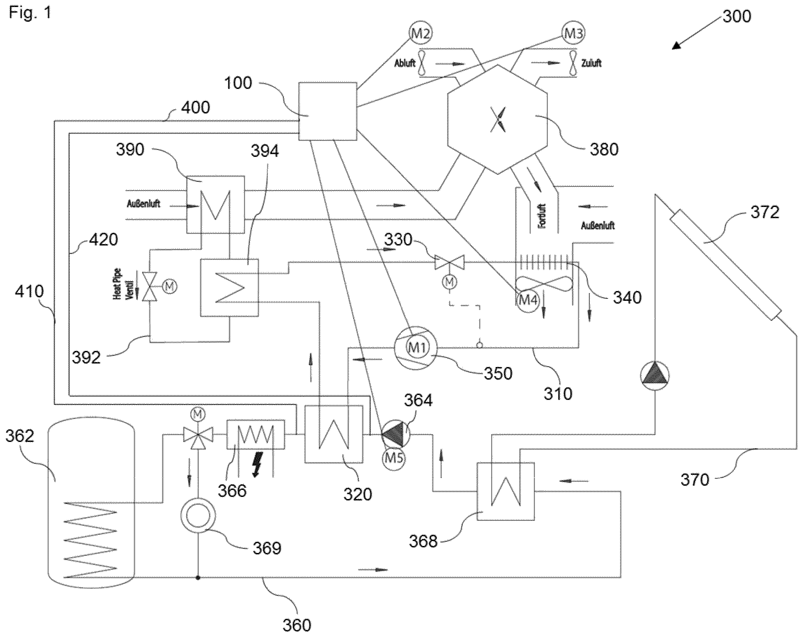

Fig. 1 zeigt schematisch und exemplarisch den Aufbau einer erfindungsgemäßen Wärmepumpe 300 mit integrierter Lüftung und weiteren integrierten Komponenten. Die Wärmepumpe 300 umfasst eine erfindungsgemäße elektrische Baugruppe 100, die mehrere Motoren M1, M2, M3, M4, M5 ansteuert.

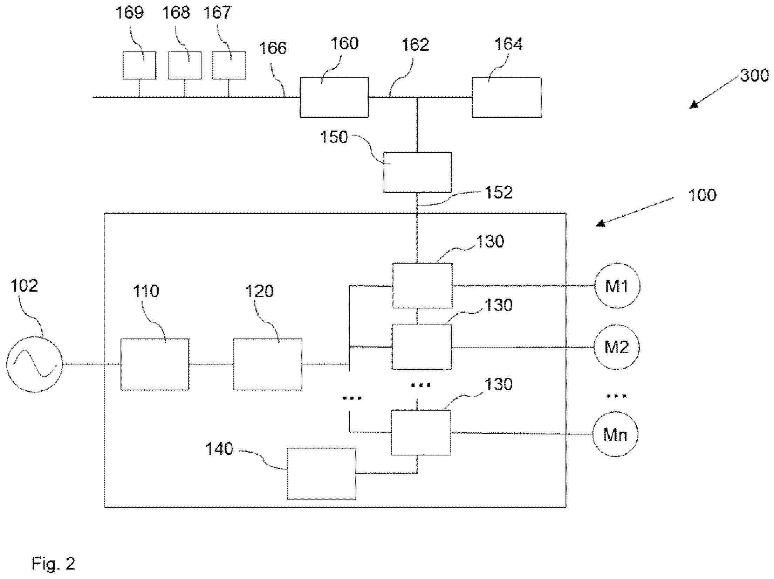

Die elektrische Baugruppe 100, die mit Verweis auf die Fig. 2 nachfolgend im Detail beschrieben wird, ermöglicht eine gleichzeitige individuelle Ansteuerung und Leistungsregelung mehrerer Motoren, in dem Beispiel von fünf Motoren M1, M2, M3, M4 und M5. Zur Leistungsregelung wird hier ein indirekter Umrichter eingesetzt, der einen einzigen Gleichspannungs- oder Gleichstromkreis als Zwischenkreis umfasst und an diesen Zwischenkreis mehrere individuell ansteuerbare Wechselrichter zur Leistungsregelung der einzelnen Elektromotoren angeschlossen sind. Durch die Verwendung eines einzigen Zwischenkreises, mit dem mehrere Motoren versorgt werden, wird die Einprägung von Oberschwingungen in das Stromnetz reduziert. Zudem ist der Aufbau der Wärmepumpe durch die Reduktion von Komponenten insgesamt vereinfacht, ohne dass die Effizienz der Wärmepumpe sinkt.

Weiter umfasst die Wärmepumpe 300 einen Kältemittelkreislauf 310. Der Kältemittelkreislauf 310 umfasst ein Kältemittel, einen Verflüssiger 320, ein Expansionsventil 330, einen Verdampfer 340 und einen Verdichteter 350. Der Kältemittelkreislauf 310 ist exemplarisch für einen Kältekreis und die Erfindung ist auch ebenso auf andere bekannte Ausführungen von Kältekreisen, beispielsweise mit zusätzlichen Wärmeübertragern, Trocknern, etc., anwendbar.

Der Verdichter 350 ist dafür eingerichtet, durch einen ersten Elektromotor M1 betrieben zu werden, insbesondere drehzahlregelbar betrieben zu werden. Der Elektromotor M1 wird von der elektrischen Baugruppe 100 angesteuert und mit elektrischer Energie versorgt.

Im Kältemittelkreislauf 310 liegt das Kältemittel teilweise gasförmig und teilweise flüssig vor. Das gasförmige Kältemittel wird im Verdichter 350 verdichtet. Beim Verdichten erhöht sich die Temperatur des gasförmigen Kältemittels weiter. Anschließend gibt das Kältemittel im Verflüssiger 320 Wärme an einen Speicherkreislauf 360 ab, der später beschrieben wird.

In dem gezeigten Beispiel ist die Wärmepumpe 300 mit einer Lüftungsanlage kombiniert. Restwärme in dem Kältemittel nach Austritt aus dem Verflüssiger 320 kann hier anschließend in einem Vorerwärmer 390 zur Erwärmung von Außenluft verwendet werden. Dadurch kann eine elektrische Vorheizung der Außenluft vermieden werden. Hierfür wird über einen Unterkühler 394 Wärme aus dem Kältemittelkreislauf auf einen Vorerwärmer-Wärmekreislauf 392 übertragen. Der Vorerwärmer-Wärmekreislauf 392 wird vorzugsweise durch eine über ein Ventil steuerbare Heatpipe umgesetzt, da keine beweglichen Teile erforderlich sind. Bei Wärmepumpen ohne integrierte Lüftungsanlage kann folglich auch der Vorerwärmer-Wärmekreislauf 392 entfallen.

In dem Kältemittelkreislauf 310 durchläuft das Kältemittel anschließend das Expansionsventil 330, das ein Beispiel eines Drosselorgans ist, und wird dort expandiert. Bei diesem Vorgang kühlt sich das Kältemittel ab und verflüssigt sich. Nachfolgend wird dem Kältemittel Wärme über den Verdampfer 340 zugeführt.

In diesem Beispiel ist die Wärmepumpe 300 eine Luft-Wasser-Wärmepumpe, der Verdamper 340 also zur Aufnahme von Wärme aus Luft ausgeführt. Die Erfindung ist ebenso auf andere Arten von Wärmepumpen anwendbar.

Ein von einem Motor M4 angetriebener Lüfter führt den Luftstrom über den Verdampfer 340. Der Motor M4 wird ebenfalls von der elektrischen Baugruppe 100 drehzahlregelbar angesteuert und mit elektrischer Energie versorgt.

Die Wärme stammt in diesem Beispiel zusätzlich zu Umgebungsluft, also Außenluft, aus Fortluft aus der Lüftungsanlage. Beide Luftströme werden über den durch den Motor M4 angetriebenen Lüfter über den Verdampfer 340 geführt.

Zuletzt wird das Kältemittel wieder den Verdichter 350 zugeführt und der Kreislauf erneut durchlaufen.

Die Lüftungsanlage der Wärmepumpe 300 umfasst einen Kreuz-Gegenstrom Wärmeübertrager 380, der über einen Wärmeübertrage Wärme der Abluft entnimmt und diese an die Außenluft im Zuluftstrang überträgt. Die abgekühlte Abluft im Fortluftstrang kann wie erwähnt auch über den Verdampfer 340 geführt werden.

In dem Zuluftstrang und dem Abluftstrang sind jeweils ein Lüfter mit zugehörigem Lüftermotor M2 bzw. M3 angeordnet, um den jeweiligen Luftstrom zu erzeugen. Auch diese beiden Motoren M2 und M3 werden von der elektrischen Baugruppe 100 drehzahlregelbar angesteuert und mit elektrischer Energie versorgt.

Der bereits erwähnte Speicherkreislauf 360 umfasst einen Warmwasserspeicher 362 sowie eine Umwälzpumpe 364. Die Umwälzpumpe 364 wird über einen Elektromotor M5 betrieben, der von der elektrischen Baugruppe 100 drehzahlregelbar angesteuert und mit elektrischer Energie versorgt wird.

Außerdem enthält der Speicherkreislauf 360 in diesem Beispiel eine optionale elektrische Nacherwärmung 366. Diese kann genutzt werden, um dem Speicherkreislauf 360 weiter Wärme zuzuführen, beispielsweise bei sehr niedrigen Außentemperaturen.

Des Weiteren umfasst die gezeigte Wärmepumpe der Speicherkreislauf 360 einen beispielhaften Solarwärmeübertrager 368. Der Solarwärmeübertrager 368 ist an einen Solarkollektorkreislauf 370 angeschlossen, welcher mindestens einen Solarkollektor 372 umfasst. Durch diesen Aufbau kann Solarenergie in Form von Wärme an den Speicherkreislauf übertragen werden und optimiert zusätzlich die Energieeffizienz der Wärmepumpe 300. In diesem Beispiel kann ferner ein nicht gezeigter Motor, der über die elektrische Baugruppe 100 drehzahlregelbar angesteuert und mit elektrischer Energie versorgt wird, eine Umwälzpumpe im Solarkollektorkreislauf 370 betreiben. In anderen Wärmepumpen 300 können Photovoltaiksysteme anstelle von Wärme elektrischen Strom erzeugen, der dann wieder zum Betrieb der elektrischen Komponenten der Wärmepumpe verwendbar ist.

Darüber hinaus kann der Speicherkreislauf 360 einen Bypass 400 umfassen. Der Bypass 400 wird vorzugsweise über ein Durchflussventil gesteuert und kann die elektrische Baugruppe 100 mit Vorlaufwasser über eine Vorlaufverbindung 410 kühlen. Die elektrische Baugruppe 100 wird durch das Vorlaufwasser gekühlt und erwärmt dieses dabei. Das Rücklaufwasser weist sodann eine Temperatur auf, die in etwa dem im Verflüssiger 320 erwärmten Vorlaufwasser entspricht. Das erwärmte Rücklaufwasser wird anschließend wieder dem Speicherkreislauf über eine Rücklaufverbindung 420 zugeführt. Der Bypass 400 umfasst vorzugsweise ein Durchflussventil, um die Kühlung der elektrischen Baugruppe 100 zu steuern.

Fig. 2 zeigt schematisch eine elektrische Baugruppe 100 aus Fig. 1 im Detail, die auch als Multiinverter bezeichnet werden kann. Die elektrische Baugruppe 100 ist an ein elektrisches Versorgungsnetz 102 anschließbar. Der Anschluss kann einphasig oder mehrphasig, beispielsweise dreiphasig, erfolgen.

Die Baugruppe 100 umfasst zunächst einen Gleichrichter 110, der die Wechselspannung des Versorgungsnetzes 102 gleichrichtet und einem Zwischenkreis 120 bereitstellt. Der Zwischenkreis 120 ist insbesondere ein Gleichstromzwischenkreis oder ein Gleichspannungszwischenkreis.

Das erfindungsgemäße Konzept ist dadurch realisiert, dass mehrere Leistungsmodule 130 mit dem einen Zwischenkreis 120 verbunden werden. Der gezeigte Umrichter ermöglicht dadurch, dass mehrere Elektromotoren M1, M2, ..., Mn unabhängig voneinander in der Leistung regelbar sind, ohne dass mehrere Umrichter hierfür benötigt werden.

Die Leistungsmodule 130 umfassen insbesondere ausgangsseitige Wechselrichter, die den jeweiligen Elektromotor frequenz- und/oder amplitudenvariabel direkt mit elektrischem Strom versorgt. Die gesamte Baugruppe 100 erfüllt demnach die Funktion eines Wechselstrom-Umrichters, wobei mehrere Elektromotoren M1, M2, ..., Mn durch einen einzigen Umrichter unabhängig voneinander mit unterschiedlichem Wechselstrom beaufschlagt werden.

Vorzugsweise umfasst die Baugruppe 100 auch eine Motorsteuerung 140, die entweder separat oder als Teil der Leistungsmodule 130 implementiert ist. Die Motorsteuerung 140 ermöglicht zusätzliche Funktionen zur Motorsteuerung und/oder zum Motorschutz wie beispielsweise Drehzahlmessung und Verfahren zur Kommutierung, um das Drehfeld abhängig vom momentanen Zustand der Maschine anzupassen. Zusätzlich können Einrichtungen zum Motorschutz implementiert sein. Die Baugruppe 100 kann in diesem Fall dann auch als Frequenzumrichter bezeichnet werden.

Die Leistungsmodule 130 arbeiten insbesondere mit leistungselektronischen Schaltern (gesteuerten Brücken). Das können unter anderem Leistungstransistoren sein, wie Metall-Oxid-Halbleiter-Feldeffekttransistor, (MOSFET); Insulated Gate Bipolar Transistor, (IGBT); IGC-Thyristoren, (IGCT) und andere. Die Leistungsmodule 130 erzeugen vorzugsweise durch Pulsdauermodulation (PDM) eine veränderliche Spannung. Die Höhe der resultierenden Ausgangsspannung und auch deren Frequenz können in weiten Grenzen geregelt werden. Neben der Pulsdauermodulation gibt es in anderen Ausführungsformen auch Leistungsmodule 130 die als Sinusfrequenzumrichter mit selbst oszillierender variabler Taktfrequenz ausgeführt sind, diese erzeugen am Ausgang eine rein sinusförmige Spannung.

Die Leistungsmodule 130 bzw. die Motorsteuerung 140 werden bzw. wird von einer integrierten Wärmepumpensteuerung 150 gesteuert. Die Wärmepumpensteuerung 150 erfasst Sensorwerte, beispielsweise Druck und/oder Temperaturwerte der Wärmepumpe 300 und regelt die Aktoren der Wärmepumpe 300, einschließlich der Elektromotoren M1, M2... Mn auf Grundlage dieser erfassten Sensorwerte. Kältekreisregelungen, wie sie durch die Wärmepumpensteuerung 150 implementiert werden, sind grundsätzlich bekannt. Im Unterschied zu bekannten Wärmepumpen, ist es in der vorliegenden Erfindung allerdings möglich, dass eine einzige Baugruppe 100 bzw. ein einziger Umrichter die mehreren Elektromotoren M1, M2,... ansteuern kann.

Weiter vorzugsweise kann das Durchflussventil und alle anderen Ventile und Drosselorgane von der integrierten Wärmepumpensteuerung 150, vgl. Fig. 2, gesteuert werden.

Ein weiteres BUS-System kann vorzugsweise zwischen der integrierten Wärmepumpensteuerung 150 und Sensoren und/oder Aktuatoren vorhanden sein. Vorzugsweise umfasst der Warmwasserbehälter 362 einen Temperatursensor und/oder das Expansionsventil einen Drucksensor. Diese Sensoren senden Daten über das BUS-System an die integrierte Wärmepumpensteuerung 150. Darüber hinaus kann die integrierte Wärmepumpensteuerung 150 über dieses BUS-System Aktoren, wie hydraulische Ventile oder die elektrische Nacherwärmung steuern.

Die Wärmepumpensteuerung 150, die effektiv die Regelung der Wärmepumpe 300 umsetzt, wird wiederum von einem Wärmepumpenmanager 160 geregelt. Der Wärmepumpenmanager 160 kann ein Softwareprogramm, eine Regelungselektronik, eine manuelle Steuerung oder dergleichen sein. Der Wärmepumpenmanager 160 ist insbesondere dazu ausgebildet, Zielvorgaben für die Wärmepumpe 300 vorzusehen, beispielsweise gewisse Zielwerte für Raumtemperaturen und/oder Wassertemperaturen des Warmwasserspeichers zu bestimmten Zeiten. Der Wärmepumpenmanager 160 kann hierfür auch auf Wetterprognosen und andere Daten zugreifen.

Vorzugsweise sind Wärmepumpenmanager 160 und integrierte Wärmepumpensteuerung 150 über eine Signalverbindung 162, wie beispielsweise eine drahtgebundene oder drahtlose Signalverbindung, beispielsweise ein CAN-Bus oder ein WLANmiteinander verbunden. Vorzugsweise kann über die Signalverbindung 162 ein Multifunktionsgerät 164, wie eine Anzeige, ein Bedienfeld oder anderweitige direkt an der Wärmepumpe 300 bereitgestellte Benutzerschnittstelle angeschlossen sein. Auch können weitere Bedienelemente und/oder Anzeigen wie ein FES 169, ein ISG 168 oder ein FET 167 über die Signalverbindung 162 gekoppelt sein. Die Signalverbindung 152 zwischen der integrierten Wärmepumpensteuerung 150 und den Leistungsmodulen 130 ist beispielsweise ein physikalisch differentieller BUS mit Master-Slave Architektur, auch ModBUS genannt.

Das FES 169 ist ein Beispiel für eine entfernt von dem Gehäuse der Wärmepumpe 300 angeordnete Bedieneinheit, die insbesondere mit Lüftungs-Integralgeräten kombiniert wird. Das FES 169 ermöglicht nicht nur die komfortable Bedienung, sondern zeigt auch die Anlagenparameter für den Wohnraum an. Beispielsweise kann ein integrierte Raumfühler eine automatische Heizkurven-Anpassung initiieren. Die Kommunikation erfolgt kabelgebunden über den Stiebel Eltron Bus oder auch kabellos, beispielsweise über WLAN, die Montage erfolgt auf einer Schalterdose.

Das ISG 168 ist ein Beispiel für ein Internet Service Gateway als Web-Schnittstelle, die an den Router des Heimnetzwerks anschließbar ist. Es ermöglicht eine Geräteeinstellung über eine integrierte Web-Oberfläche beispielsweise mit einem Standardbrowser. Zudem ist eine Kommunikation mit einer Kundendienst-Zentrale möglich und die Möglichkeit zur Kontrolle der Wärmepumpe 300 über eine Smart-phone-"Web-App" wird geschaffen. Auch das ISG 168 kann kabelgebunden oder kabellos mit dem Wärmepumpenmanager 160 verbunden sein.

Das FET 167 ist ebenfalls ein Beispiel für eine entfernt von der Wärmepumpe 300 angeordnete Bedieneinheit, die eine Raumfernbedienung mit Thermostatfunktion für den Wärmepumpenmanager 160 ausbildet. Sie ermöglicht insbesondere eine einfache, intuitive Bedienung über ein Touchwheel mit Matrixdisplay und eine Anzeige der Raumtemperatur und Luftfeuchtigkeit. Zudem ist eine einfache Verstellung der Komforttemperatur möglich.

### Bezugszeichenliste

100 elektrische Baugruppe
102 Versorgungsnetz
110 Gleichrichter
120 Zwischenkreis
130 Leistungsmodul
140 Motorsteuerung
150 Wärmepumpensteuerung
152 Signalverbindung
160 Wärmepumpenmanager
162 Signalverbindung
164 Multifunktionsgerät
167 FET
168 ISG
169 FES
300 Wärmepumpe
310 Kältemittelkreislauf
320 Verflüssiger
330 Expansionsventil
340 Verdampfer
350 Verdichter
360 Speicherkreislauf
362 Wärmespeicher
364 Umwälzpumpe
366 Nacherwärmung
368 Solarwärmeübertrager
370 Solarkollektorkreislauf
372 Solarkollektor
380 Wärmeübertrager
390 Vorerwärmer
392 Vorerwärmer-Wärmekreislauf
394 Unterkühler
400 Bypass
410 Vorlaufverbindung
420 Rücklaufverbindung

## Patentansprüche

1. Elektrische Baugruppe (100) zur Ansteuerung mindestens zweier Elektromotoren (M1,M2,...Mn) einer Wärmepumpe (300), umfassend
mindestens zwei Leistungsmodule (130),
einen Zwischenkreis (120), und
einen Gleichrichter (110),
wobei der Gleichrichter (110) an ein Stromnetz anschließbar ist, das Wechselspannung bereitstellt, zur Gleichrichtung der elektrischen Wechselnetzspannung und zur Bereitstellung der gleichgerichteten Spannung an dem Zwischenkreis (120),
wobei der Zwischenkreis (120) dazu ausgebildet ist, jedes Leistungsmodul (130) der mindestens zwei Leistungsmodule (130) mit elektrischem Strom zu versorgen,
wobei jedes Leistungsmodul (130) dafür eingerichtet ist, einen elektrischen Wechselstrom mit steuerbarer Frequenz und/oder Amplitude zur leistungsvariablen Ansteuerung jeweils eines Elektromotors (M1,M2,... Mn) der Wärmepumpe (300) bereitzustellen.

2. Elektrische Baugruppe (100) nach Anspruch 1, wobei jeder Elektromotor der mindestens zwei Elektromotoren (M1,M2,...Mn) dafür eingerichtet ist, einen Verdichter (350) oder einen Wärmepumpenlüfter oder einen Zuluftlüfter oder einen Abluftlüfter oder eine Umwälzpumpe (364) in Bewegung zu setzen.

3. Elektrische Baugruppe (100) nach einem der vorstehenden Ansprüche, wobei die bereitgestellte Wechselspannung sämtlicher der Leistungsmodule (130) unabhängig voneinander steuerbar ist.

4. Elektrische Baugruppe (100) nach einem der vorherigen Ansprüche, die weiter eine Motorschutzeinrichtung (140) umfasst.

5. Elektrische Baugruppe (100) nach einem der vorherigen Ansprüche, wobei die Leistungsmodule (130) Steuerelektronik aufweisen, die dazu ausgebildet sind, Frequenz- und/oder Amplitude der an den Elektromotoren (M1,M2,...Mn) bereitgestellten elektrischen Wechselspannung zu steuern.

6. Elektrische Baugruppe (100) nach einem der vorherigen Ansprüche, wobei die Baugruppe (100) mit Gleichstrom oder mit Gleichspannung im Zwischenkreis (120) ausgeführt ist.

7. Wärmepumpe (300), umfassend eine elektrische Baugruppe (100) nach einem der vorstehenden Ansprüche und einen Kältemittelkreislauf (310), wobei der Kältemittelkreislauf (310) ein Kältemittel, einen Verflüssiger (320), ein Expansionsventil (330), einen Verdampfer (340) und einen Verdichter (350) umfasst, wobei der Verdichter (350) einen ersten Elektromotor (M1) aufweist und wobei der Verdampfer (340) einen Lüfter mit einem zweiten Elektromotor (M4) aufweist,
wobei die elektrische Baugruppe (100) dafür eingerichtet ist, den ersten und den zweiten Elektromotor (M1, M4) insbesondere unabhängig voneinander anzusteuern.

8. Wärmepumpensystem mit einer Wärmepumpe (300) nach Anspruch 7 und einem Speicherkreislauf (360), wobei der Verflüssiger (320) dafür eingerichtet ist, Wärme an den Speicherkreislauf (360) zu übertragen, wobei der Speicherkreislauf (360) einen Wärmespeicher (362) und eine Umwälzpumpe (364) umfasst, wobei die Umwälzpumpe (364) einen Elektromotor (M5) umfasst und von diesem betreibbar ist, wobei der Elektromotor (M5) der Umwälzpumpe (364) von einem eigenen Leistungsmodul (130) der elektrischen Baugruppe (100) angesteuert wird.

9. Wärmepumpensystem nach Anspruch 8, wobei der Wärmespeicher (362) des Speicherkreislaufes (360) ein Warmwasserbehälter ist und/oder der Speicherkreislauf (360) eine elektrische Nacherwärmung (366) umfasst.

10. Wärmepumpe (300) nach einem der Ansprüche 7 bis 9, wobei der Speicherkreislauf (360) einen Solarwärmeübertrager (368) umfasst, der dafür eingerichtet ist, Wärme von einem Solarkollektorkreislauf (370) an den Speicherkreislauf (360) zu übertragen, wobei der Solarkollektorkreislauf (370) mindestens einen Solarkollektor (372) und eine Umwälzpumpe mit einem weiteren Elektromotor umfasst, wobei der weitere Elektromotor der Umwälzpumpe von einem eigenen Leistungsmodul (130) der elektrischen Baugruppe (100) angesteuert wird..

11. Wärmepumpe (300) nach einem der Ansprüche 7 bis 10, wobei ein Kreuz-Gegenstrom Wärmeübertrager (380) Fortluft an dem Verdampfer (340) bereitstellt, wobei der Kreuz-Gegenstrom Wärmeübertrager (380) einströmende Abluft und einströmende Außenluft zur Wärmeübertragung miteinander kreuzt und Zuluft, sowie Fortluft ausströmt.

12. Wärmepumpe (300) nach Anspruch 11, wobei Abluft über einen Lüfter für Abluft am Kreuz-Gegenstrom Wärmeübertrager (380) bereitgestellt wird, wobei der Lüfter für Abluft einen Elektromotor (M2) umfasst, der von einem Leistungsmodul (130) der elektrischen Baugruppe (100) angesteuert wird, und
wobei Zuluft über einen Lüfter für Zuluft vom Kreuz-Gegenstrom Wärmeübertrager (380) abgeführt wird, wobei der Lüfter für Zuluft einen Elektromotor (M3) umfasst, der von einem eigenen Leistungsmodul (110) der elektrischen Baugruppe (100) angesteuert wird.

13. Wärmepumpe (300) nach einem der Ansprüche 11 oder 12, wobei ein Vorerwärmer (390) Außenluft vor dem Eintritt in den Kreuz-Gegenstrom Wärmeübertrager (380) erwärmt, vorzugsweise, wobei der Vorerwärmer (390) einen insbesondere als Heatpipe ausgeführten Vorerwärmer-Wärmekreislauf (392) umfasst, wobei ein Unterkühler (394) dafür eingerichtet ist, Wärme vom Kältemittelkreislauf (310) der Wärmepumpe (300) an dem Vorerwärmer-Wärmekreislauf (392) bereitzustellen.

14. Wärmepumpe (300) nach einem der Ansprüche 7 bis 13, wobei der Speicherkreislauf (360) einen Heizkreis (369) umfasst.

15. Wärmepumpe (300) nach einem der Ansprüche 7 bis 14, wobei der Inverterzwischenkreis (120) über einen Bypass (122) mit Rücklaufwasser aus dem Speicherkreislauf (360) gekühlt wird.
